# EUROPÄISCHE PATENTANMELDUNG

(11) **EP 4 106 160 A1**
(43) Veröffentlichungstag der Anmeldung: **21.12.2022**
(21) Anmeldenummer: 21180412.5
(22) Anmeldetag: 18.06.2021
(51) Int. Cl.: H02K 35/02, B25J 9/12, B25J 21/00

(54) **VORRICHTUNG ZUR MANIPULATION EINES GEGENSTANDES, VERFAHREN ZUR BEFÜLLUNG EINES GEGENSTANDES UND KORRESPONDIERENDE VERWENDUNG**

(71) Anmelder: TT Innovation AG, 6300 Zug (CH)
(72) Erfinder: TONDERA, Marc, 4125 Riehen (CH); SCHNEIDLER, Tobias Jan, 6332 Hagendorn (CH); CARLI, Julia Annette, 4053 Basel (CH); MÜLLER, Mathieu, 68510 Sierentz (FR); LEUENBERGER, Philipp, 4052 Basel (CH); RETHORET, Christophe, 68500 Issenheim (FR); ZELLER, Mike, 4246 Wahlen (CH)
(74) Vertreter: Mertzlufft-Paufler, Cornelius

(57) **Zusammenfassung**

Die Erfindung schlägt eine Vorrichtung (1) zur Manipulation eines Gegenstandes (3) vor, wobei der Gegenstand (3) von wenigstens einem Mover (4), der magnetisch an einer Stator-Anordnung (5) angekoppelt ist, berührungslos auf einer Antriebsfläche bewegbar ist, wobei die Antriebsfläche (7) als dichte Begrenzung, insbesondere als Begrenzungswand (8) eines geschützten Innenraums (9) ausgebildet ist. Die Verwendung einer solchen flexiblen Vorrichtung (1) ist vorzugsweise in der Lebensmittelindustrie oder pharmazeutischen Industrie von Interesse, jedoch nicht auf diese Bereiche beschränkt (vgl.

## Beschreibung

Die Erfindung betrifft eine Vorrichtung zur Manipulation eines Gegenstandes wobei der Gegenstand von wenigstens einem Mover, der magnetisch an einer Stator-Anordnung angekoppelt ist, berührungslos auf einer Antriebsfläche bewegbar ist.

Es ist üblich, spezielle Fertigungsverfahren, die eine kontrollierte und/oder sterile Umgebung benötigen, in geschützten Innenräumen durchzuführen. Solche geschützten Innenräume sind unter anderem Reinräume, wie beispielsweise Isolatoren, Containments oder radioaktiv belastete Räume. Geschützte Innenräume finden vielseitig Verwendung unter anderem bei der Herstellung von Halbleitern, in der Luft- und Raumfahrttechnik sowie bei der aseptischen Produktion oder Verpackung von Lebensmitteln und pharmazeutischen oder kosmetischen Erzeugnissen. Halb- oder vollautomatisierte Prozessschritte werden weitestgehend zur Optimierung der speziellen Fertigungsverfahren verwendet. Jedoch werden häufig verschiedenste Verfahrensschritte durch Menschenhand getätigt, was zu Kontaminationen der zu fertigenden Produkte führen kann, auch wenn das Verfahren innerhalb eines geschützten Innenraums durchgeführt wird.

Vorrichtungen zur Manipulation von Gegenständen in der Industrie sind bekannt. Als Manipulation kann hierbei beispielsweise jeder Prozess angesehen werden, der zur Verarbeitung und/oder Fertigstellung eines Produktes in einer Vorrichtung stattfinden kann. Beispielsweise werden in der pharmazeutischen Industrie Injektionsfläschchen über ein konventionelles Fließband, einen Förderstern oder einen Förderrechen zunächst zu einer Befülleinrichtung geführt, dort befüllt, um anschließend über das Fließband zu weiteren Prozessstationen transportiert zu werden. Derartige Systeme können relativ unflexibel, störanfällig und wartungsintensiv sein.

Neuerdings gibt es Vorrichtungen zur Manipulation von Gegenständen, bei denen ein als Mover bezeichneter Transportkörper in einem elektromagnetischen Feld vorzugsweise berührungslos in zumindest zwei Freiheitsgraden bewegbar und/oder drehbar ist. Der Mover wird magnetisch an eine Stator-Anordnung (Planarmotorsystem) angekoppelt und levitiert berührungslos wenige Millimeter über der Stator-Anordnung. Die Stator-Anordnung besteht aus mindestens einer Kachel und kann modular an die gegebenen Raumbedingungen positioniert und verändert werden.

Die Erfindung betrifft weiter ein Verfahren zum Befüllen eines Gegenstandes, der von einem Mover auf einer Begrenzungswand eines geschützten Innenraums zu einer Befülleinrichtung transportiert und durch die Befülleinrichtung befüllt wird.

Die Erfindung betrifft weiterhin die Verwendung einer Begrenzungswand eines geschützten Innenraums als Antriebsfläche.

Der Erfindung liegt die Aufgabe zugrunde, die Nutzung geschützter Innenräume zu erweitern und flexibler zu gestalten.

Zur Lösung der genannten Aufgabe sind erfindungsgemäß die Merkmale des Anspruchs 1 vorgesehen. Insbesondere wird somit zur Lösung der genannten Aufgabe bei einer Vorrichtung der eingangs beschriebenen Art vorgesehen, dass die Antriebsfläche als dichte Begrenzung, insbesondere als Begrenzungswand eines geschützten Innenraums ausgebildet ist. Dies kann erfindungsgemäß die Gesamtheit der Begrenzungswände oder Teile davon beinhalten. Somit kann sich die Antriebsfläche auch auf weitere, möglicherweise nicht horizontale, Flächen innerhalb des geschützten Innenraums erweitern, wodurch eine erweiterte Funktionalität und/oder Arbeitskapazität sowie eine größere Flexibilität erreicht werden kann. Somit kann die Stator-Anordnung an der Begrenzungswand des geschützten Innenraums ausgebildet werden, wodurch gleichzeitig Raum sowie Material gespart werden kann.

Von Vorteil ist dabei, dass ein Transport im geschützten Innenraum abriebsfrei ist. Somit ist ein geringerer Aufwand für die Reinigung erforderlich. Es kann somit auch erreicht werden, dass während der Produktion keine Partikel freigesetzt werden, die Verunreinigungen zum Beispiel bei einer Abfüllung erzeugen könnten.

Bei einer weiteren vorteilhaften Ausgestaltung der Erfindung kann vorgesehen sein, dass die Stator-Anordnung außerhalb eines geschützten Innenraums angeordnet ist. Somit ist die Stator-Anordnung von den Bedingungen im Innenraum trennbar. Beispielsweise kann vorgesehen sein, dass die Stator-Anordnung an einer Begrenzungswand befestigt ist. Somit ergibt sich eine besonders platzsparende Variante. Hierbei kann vorgesehen sein, dass die Begrenzungswand vertikal und/oder horizontal und/oder schräg angeordnet ist. Es sind somit unterschiedlich orientierte Begrenzungswände nutzbar.

Bei einer Ausgestaltung der Erfindung kann vorgesehen sein, dass der wenigstens eine Mover im geschützten Innenraum angeordnet ist. Vorteilhaft ist dabei, dass viele Prozesse, insbesondere Förder- und/oder Transportprozesse, im geschützten Innenraum ohne ein manuelles Eingreifen ausführbar sind. Ein kontrollierter Austausch beispielsweise von Luft zwischen Innenraum und Umgebung ist somit erreichbar. Ein solch kontrollierter Austausch ist bei aseptischen Anwendungen mit Isolatoren oder bei toxischen Verfahren in Containments von großer Bedeutung. Weiterhin können gegebenenfalls kostspielige und zeitaufwändige Reinraumtests in Form von beispielsweise mikrobiologischen Abklatschplatten verringert werden. Die Ausgestaltung kann es beispielsweise ermöglichen, den wenigstens einen Mover in einem Innenraum zu betreiben, in den keine Substanzen von außen unkontrolliert eintreten und/oder aus dem keine Substanzen nach außen unkontrolliert austreten können.

Es kann weiterhin vorgesehen sein, dass der wenigstens eine Mover außerhalb eines geschützten Innenraums angeordnet ist. Für ein funktionelle Anordnung kann folglich eine korrespondierende Stator-Anordnung innerhalb des geschützten Innenraums eingefasst sein. Somit können vorteilhaft Prozesse außerhalb des geschützten Innenraums durchgeführt werden. Es kann somit verhindert werden, dass Partikel und/oder Verunreinigungen, die durch oder an der Stator-Anordnung entstehen und/oder freigesetzt werden, aus dem Innenraum unkontrolliert austreten.

Bei einer weiteren vorteilhaften Ausgestaltung der Erfindung kann vorgesehen sein, dass die Begrenzungswand des geschützten Innenraums einen Kopplungsbereich aus der Stator-Anordnung und dem wenigstens einen Mover beinhaltet, insbesondere wobei die Fläche innerhalb des Kopplungsbereiches kleiner als die Fläche der Begrenzungswand sein kann. Dabei ist vorteilhaft, dass außerhalb des Kopplungsbereichs und/oder im geschützten Innenraum weitere Vorrichtungen angebracht werden können, beispielsweise magnetisch nicht neutrale Vorrichtungen und/oder Konstruktionen, welche beeinflussend und störend auf das Magnetfeld oder den Bewegungsspielraum der Mover wirken können.

Beispielsweise können Greifvorrichtungen, Waagen, Verschlusssysteme, Befülleinrichtungen oder konventionelle Transportsysteme zur Manipulation von Behältnissen außerhalb des Kopplungsbereichs angebracht werden.

Bei einer weiteren vorteilhaften Ausgestaltung der Erfindung kann vorgesehen sein, dass die Begrenzungswand und/oder ein, insbesondere der bereits erwähnte, Kopplungsbereich aus einer magnetisch neutralen Trennschicht gefertigt ist. Magnetisch neutral im Sinne der Erfindung bedeutet, dass durch die verwendeten Materialen eine Störung oder Beeinträchtigung einer magnetischen Kopplung zwischen Mover und Stator-Anordnung gemindert oder vermieden werden kann.

Beispielsweise kann die Trennschicht aus einer Edelstahl-und/oder Glasschicht gefertigt sein oder eine solche umfassen. Alternativ oder zusätzlich kann die Trennschicht auch aus gasdichtem Kunststoff oder Verbundwerkstoff realisiert sein. Somit sind besonders geeignete Materialien für geschützte Innenräume verwendbar.

Vorzugsweise ist die Trennschicht weniger als 2 mm stark. Somit kann der Mover für eine starke magnetische Kopplung sehr nahe an die Stator-Anordnung herangeführt werden.

Bei einer Ausgestaltung der Erfindung kann vorgesehen sein, dass die Begrenzungswand und/oder ein, beispielsweise der bereits erwähnte, Kopplungsbereich durch Trägerkomponenten stabilisiert ist. Die Verwendung von Trägerkomponenten ist vorteilhaft für die Statik der Vorrichtung.

Hierbei ist es günstig, wenn die Trägerkomponenten aus magnetisch neutralen Materialen bestehen. Somit ist eine Störung der Ankopplung und/oder eine Deformation der magnetischen Felder reduzierbar oder sogar vermeidbar. Dies ist in Verbindung mit einer magnetisch neutralen Trennschicht besonders vorteilhaft.

Bei einer weiteren vorteilhaften Ausgestaltung der Erfindung kann vorgesehen sein, dass die Stator-Anordnung in wenigstens einem Rack aufgebaut ist. Vorteilhaft ist hierbei, dass die Stator-Anordnung in dem wenigstens einem Rack stabilisierbar ist.

Hierbei ist es günstig, wenn das wenigstens eine Rack direkt an der Begrenzungswand und/oder einem, beispielsweise dem bereits erwähnten, Kopplungsbereich angelagert ist. Dadurch kann die Stator-Anordnung sehr nah für eine magnetische Kopplung an den Mover bereitgestellt werden.

Alternativ kann das Rack auch frei an der Begrenzungswand und/oder dem Kopplungsbereich positioniert sein, um eine flexiblere Bewegung der Racks zu ermöglichen.

Bevorzugt ist das mindestens eine Rack von und zum Einsatzort bewegbar und/oder am Einsatzort zwischen einer der Begrenzungswand angenäherten Arbeitsposition und einer von der Begrenzungswand entfernten Position verstellbar ist. Da Stator-Anordnungen zugänglich sein müssen, beispielsweise für Wartungs- und/oder Reparaturarbeiten, ist eine Ausgestaltung der Stator-Anordnung in verfahrbaren Racks vorteilhaft. Zudem kann das Rack vorteilhaft zu einer von der Begrenzungswand entfernten Position fahren, wodurch Stator-Anordnungen entnommen werden können, ohne selbst Schaden zu nehmen oder Schaden an der Begrenzungswand zu verursachen.

Bei einer weiteren vorteilhaften Ausgestaltung der Erfindung kann vorgesehen sein, dass die Begrenzungswand und/oder die Trennschicht von der Vorrichtung abnehmbar sind. Von Vorteil ist dabei, dass die Begrenzungswand und/oder die Trennschicht vom Innenraum heraus abgenommen werden können, wodurch Stator-Anordnungen für eine kostengünstige Wartung erreichbar gemacht werden können.

Bei einer nächsten vorteilhaften Ausgestaltung der Erfindung kann vorgesehen sein, dass der geschützte Innenraum mindestens zwei Kammern hat, insbesondere wobei die mindestens zwei Kammern durch eine Zwischenwand getrennt sind, die vorzugsweise mindestens eine kleine Zugangsöffnung aufweist. Von Vorteil ist dabei, dass verschiedene Prozessschritte eines Verfahrens voneinander getrennt werden können, um weitere Kontaminations- und oder Partikelquellen zu beseitigen. Die mindestens eine kleine Zugangsöffnung erlaubt erfindungsgemäß den Transport von beispielsweise offenen Gefäßen von einer Kammer in eine weitere Kammer, um dort befüllt und/oder verschlossen zu werden.

Vorzugsweise ist die Zwischenwand als Begrenzungswand ausgebildet, an der weitere Prozesse getrennt voneinander durchgeführt werden können.

Alternativ oder zusätzlich kann in einer der Kammern Überdruck erzeugt werden, sodass in diese Kammer keine Kontaminationen oder Partikel von der anderen Kammer durch mindestens eine kleine Zugangsöffnung gelangen können.

Bei einer weiteren vorteilhaften Ausgestaltung der Erfindung kann vorgesehen sein, dass sich zumindest eine Prozessstation fest montiert oder auf einem Mover des geschützten Innenraums befindet. Somit können Gegenstände während des gesamten Manipulationsprozesses flexibel im geschützten Innenraum prozessiert werden.

Beispielsweise kann eine Befülleinrichtung fest montiert oder auf einem Mover positioniert sein. Eine Befülleinrichtung ermöglicht die Regulierung eines Füllstandes eines Gegenstandes.

Bevorzugt ist die zumindest eine Prozessstation an der Begrenzungswand und/oder in einem, beispielsweise dem bereits erwähnten, Kopplungsbereich befindlich. Dadurch kann sehr vorteilhaft ein mehrstufiges Fertigungsverfahren modular und dynamisch realisiert werden, da die Mover im Wesentlichen frei auf der Antriebsfläche verfahrbar sind und Verfahrwege leicht modifiziert werden können, insbesondere bei geschlossenem Innenraum und/oder ohne bewegliche Teile. Durch die erfindungsgemäße Modularität und Dynamik kann ein Verfahren und/oder Prozess schnell angepasst und verändert werden, ohne den geschützten Reinraum zu gefährden.

Es ist weiterhin möglich, dass sich die Prozessstation in einer Kammer angeordnet und in einer zweiten Kammer befestigt befindet. Vorteilhaft ist dabei, dass die Prozessstation sicher vor Verunreinigungen in einer Kammer befestigt positioniert sein kann, und zur Prozessierung in eine zweite Kammer eingebracht werden kann. Beispielsweise kann eine Prozessstation durch eine Öffnung, beispielsweise durch eine Schleuse, von einer Kammer in eine zweite Kammer eingebracht werden.

Bei einer nächsten vorteilhaften Ausgestaltung der Erfindung kann vorgesehen sein, dass die Stator-Anordnung an den Begrenzungswänden und/oder an einem, insbesondere den bereits erwähnten, Kopplungsbereichen, und/oder zwei benachbarten Wänden des geschützten Innenraums, so befestigt ist, dass der mindestens eine Mover den mindestens einen Gegenstand innerhalb der mindestens zwei Kammern und/oder durch die mindestens eine kleine Zugangsöffnung der Zwischenwand zwischen den mindestens zwei Kammern transportieren kann. Von Vorteil ist dabei, dass Arbeitsschritte, bei denen Partikel oder Verunreinigungen freigesetzt werden können, von nachfolgenden Arbeitsschritten getrennt werden können. Somit kann eine Kontaminationsverschleppung vermindert oder sogar verhindert werden.

Bei einer nächsten vorteilhaften Ausgestaltung der Erfindung kann vorgesehen sein, dass die Stator-Anordnung innerhalb der mindestens einen Zwischenwand zwischen den mindestens zwei Kammern vorzugsweise vertikal angeordnet ist. Vorteilhaft ist hierbei, dass die mindestens eine Zwischenwand eine Antriebsfläche für Mover für Hubbewegungen bereitstellt.

Alternativ oder zusätzlich kann die mindestens eine Zwischenwand als Kopplungsbereich ausgearbeitet sein, welcher mindestens einen magnetisch neutralen Bereich zur Befestigung von Greifvorrichtungen, Wagen, Verschlusssystemen, Befülleinrichtungen oder anderen Prozessstationen zur Manipulation von Behältnissen aufweisen kann.

Bei einer weiteren vorteilhaften Ausgestaltung der Erfindung kann vorgesehen sein, dass eine Stator-Anordnung innerhalb der mindestens einen Zwischenwand in wenigstens einem Rack aufgebaut ist. Dadurch kann die Stator-Anordnung für Wartungs-und/oder Reparaturarbeiten sehr einfach aus der Zwischenwand bewegt werden.

Bei einer alternativen oder zusätzlichen Ausgestaltung der Erfindung kann vorgesehen sein, dass die oder eine Begrenzungswand und/oder die oder eine Trennschicht der einen Zwischenwand abnehmbar sind. Dadurch kann die oder eine Stator-Anordnung vom Innenraum heraus erreichbar für Wartungsarbeiten sein, was vorteilhaft ist, insbesondere, wenn die oder eine Stator-Anordnung stationär, beispielsweise in stationären Racks, in der Zwischenwand befestigt ist.

Bei einer weiteren vorteilhaften Ausgestaltung der Erfindung kann vorgesehen sein, dass der geschützte Innenraum wenigstens eine durchströmte Zone aufweist. In einer durchströmten Zone kann vorteilhaft die Partikelkonzentration in der Luft verringert werden, was vorteilhaft für die Reinheit der zu bearbeiteten Produkte, insbesondere der zu befüllenden Produkte, ist.

Insbesondere kann die Antriebsfläche so ausgerichtet sein, dass der wenigstens eine Mover in die Zone und/oder in der Zone verfahrbar ist. Folglich kann eine durchströmte Zone realisiert sein, die in ihrer Fläche kleiner als die Grundfläche des geschützten Innenraums ist und durch Mover erreichbar und befahrbar ist. Vorteilhaft bei einer derartigen durchströmten Zone ist, dass weniger Energie für den Luftstrom benötigt wird, wodurch Kosten eingespart werden können. Vorteilhaft ist alternativ oder zusätzlich, dass ein weiteres Mittel bereitgestellt ist, mit dem ein Eindringen von Verunreinigungen in einen Arbeitsbereich verhinderbar ist.

Alternativ oder zusätzlich sind zur Lösung der genannten Aufgabe die Merkmale des unabhängigen auf ein Verfahren gerichteten Anspruch erfindungsgemäß vorgesehen. Insbesondere wird somit bei einem Verfahren der eingangs beschriebenen Art erfindungsgemäß vorgeschlagen, dass der mindestens eine Gegenstand von einem Mover auf einer Antriebsfläche des geschützten Innenraums zu einer Prozessstation, beispielsweise einer Befülleinrichtung bewegt und durch die Befülleinrichtung befüllt wird, wobei die Befülleinrichtung im geschützten Innenraum, insbesondere auf der Antriebsfläche, positioniert oder auf einem weiteren Mover befestigt ist. Bevorzugt wird vorgesehen, dass der Mover mit dem mindestens einen Gegenstand eine Hubbewegung zu der Befülleinrichtung ausführt, welche sich oberhalb der horizontalen Bodenebene der Vorrichtung befindet. Damit beeinflusst die vertikal angeordnete Befülleinrichtung nicht den Transportweg der Vorrichtung, wodurch in flexibler Art und Weise weitere Mover zu weiteren Prozessstationen geführt werden können.

Alternativ ist auch eine Bewegung der Befüllvorrichtung zum Mover mit dem mindestens einen Gegenstand hin denkbar.

Alternativ oder zusätzlich sind zur Lösung der genannten Aufgabe die Merkmale des unabhängigen, auf eine Verwendung gerichteten Anspruchs erfindungsgemäß vorgesehen. Insbesondere wird somit bei einer Verwendung der eingangs beschriebenen Art erfindungsgemäß vorgeschlagen, dass eine Begrenzungswand eines geschützten Innenraums als Antriebsfläche wenigstens eines Movers, der an eine Stator-Anordnung angekoppelt ist, verwendet wird. Bevorzugt wird vorgesehen, dass die Stator-Anordnung außerhalb des geschützten Innenraums positioniert ist. Somit wird eine räumliche Trennung von Mover und Stator-Anordnung ermöglicht, welche üblicherweise nicht abgegrenzt in einem Raum sind. Vorteilhaft ist dabei, dass eine Wartung und/oder eine Umrüstung der Stator-Anordnung eines geschützten Innenraums, beispielsweise eines Isolators oder Containments, flexibel umsetzbar ist.

Die Erfindung wird nun anhand von Ausführungsbeispielen näher beschrieben, ist aber nicht auf die gezeigten Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine Seitenansicht einer Vorrichtung mit unterschiedlich orientierten Stator-Anordnungen und Movern,
- Fig. 2: eine Seitenansicht einer Vorrichtung mit einem Kopplungsbereich,
- Fig. 3: eine Seitenansicht einer Vorrichtung mit Racks,
- Fig. 4: eine Seitenansicht einer Vorrichtung mit vertikal angeordneten Prozessstationen,
- Fig. 5: eine Seitenansicht einer Vorrichtung mit zwei Kammern,
- Fig. 6: eine Seitenansicht einer Vorrichtung mit zwei Kammern und einer Stator-Anordnung in einer Zwischenwand,
- Fig. 7: eine Seitenansicht einer Vorrichtung mit zwei Kammern und einer Prozessstation, die in einer Kammer befestigt ist und in eine zweite Kammer hineinragt,
- Fig. 8: eine Vorderansicht einer Vorrichtung mit einer im geschützten Innenraum befindlichen Mover-Stator-Anordnung und
- Fig. 9: einen Seitenansicht einer Vorrichtung mit einer in einem Tunnel eingefassten Stator-Anordnung.

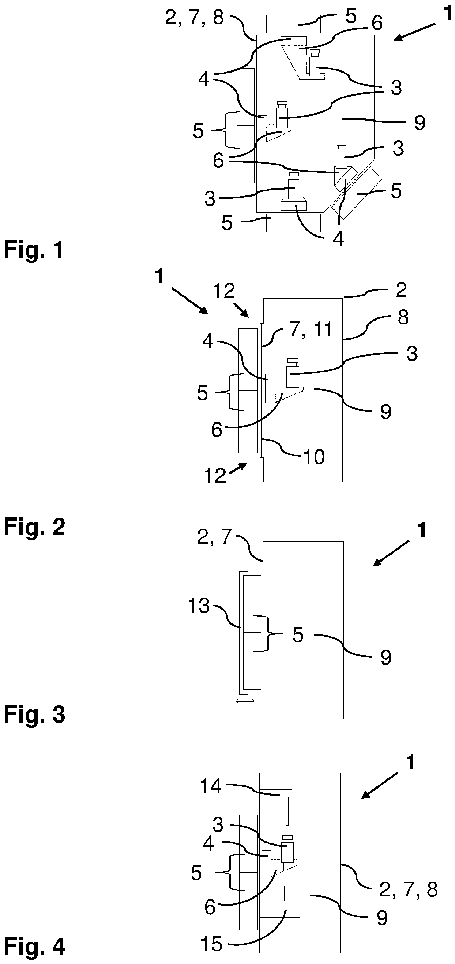

Figur 1 zeigt eine im Ganzen mit 1 bezeichnete erfindungsgemäße Vorrichtung 1. Die Vorrichtung 1 hat ein Gehäuse 2, das einen geschützten Innenraum 9 hat. Zur Ein- und Ausgabe des mindestens einen Gegenstandes 3 aus dem geschützten Innenraum 9 hat die erfindungsgemäße Vorrichtung 1 für Isolatoren oder Containments übliche Schleusen und- oder Dekontaminationsbereiche.

Alternativ oder zusätzlich kann die Vorrichtung 1 und/oder das Gehäuse 2 bewegbar sein.

In dem geschützten Innenraum 9 befinden sich am Boden, an der Decke, an einer vertikalen und schrägen Wand mindestens ein Gegenstand 3, wobei der mindestens eine Gegenstand 3 auf einer Aufnahme 6 eines Movers 4 positioniert ist. Der mindestens eine Mover 4 ist magnetisch an eine Stator-Anordnung 5 gekoppelt.

Figur 1 zeigt, dass vier Stator-Anordnungen 5, die jeweils aus einem Stator oder mehreren Statoren zusammengesetzt sind, außerhalb des geschützten Innenraums 9 an einer vertikalen, horizontalen oder schrägen Wand positioniert sind. Eine Stator-Anordnungen 5 kann alternativ auch in das Gehäuse 2 und/oder in eine Begrenzungswand 8 und/oder zwischen Gehäuse 2 und Begrenzungswand 8 positioniert werden.

Der mindestens eine Mover 4 kann passiv, durch beispielsweise integrierte Permanentmagnete (nicht gezeigt) oder aktiv, durch beispielsweise ein integriertes Spulenpaket (nicht gezeigt), an der Antriebsfläche 7 betrieben werden. Der aktive Betrieb des mindestens einen Mover 4 kann durch eine vorzugsweise berührungslose Bewegung, insbesondere eine Bewegung längs der Antriebsfläche oder mit einer Komponente quer zu dieser, eine Drehung und/oder ein Kippen, relativ zur Antriebsfläche 7 realisiert sein. In der hier gezeigten Ausführungsform bildet die Antriebsfläche 7 die Begrenzungswand 8 der Vorrichtung 1. Die erfindungsgemäße Vorrichtung 1 kann zur Bewegung des mindestens einen Gegenstandes 3 zusätzlich konventionelle Transportvorrichtungen wie Fließbänder, Sternräder und/oder Rechensysteme aufweisen.

Bei einer Ausführungsform gemäß der Figur 2 hat eine Vorrichtung 1 einen Kopplungsbereich 10, der in eine vertikale Begrenzungswand 8 eines Gehäuses 2 eingearbeitet ist. Dabei ist die Fläche des Kopplungsbereichs 10 kleiner als die Fläche der vertikalen Begrenzungswand 8. Die vertikale Begrenzungswand 8 kann innerhalb oder außerhalb des Kopplungsbereich 10 und auf Seiten des geschützten Innenraums 9 verschiedene Prozessstationen 15 positioniert haben (nicht gezeigt). Diese Prozessstationen 15 können durch mindestens einen Mover 4 zur Manipulation mindestens eines Gegenstandes 3 angefahren werden. In der Figur 2 ist die Antriebsfläche 7 als eine magnetisch neutrale Trennschicht 11 realisiert, beispielsweise eine aus Glas, Edelstahl, gasdichtem Kunststoff oder aus Verbundwerkstoff gefertigte Trennschicht 11. Weiterhin ist der Kopplungsbereich 10 durch magnetisch neutrale Trägerkomponenten 12, beispielsweise Riegel und/oder Winkel und/oder Profilschienen und/oder Rippen und/oder sonstige Versteifungen, an das Gehäuse 2 und/oder die Begrenzungswand 8 positioniert und stabilisiert.

Alternativ oder zusätzlich kann auch die Stator-Anordnung 5 durch Trägerkomponenten 12 mit dem Gehäuse 2 und/oder der Trennschicht 11 verbunden werden.

Bei einer Ausführungsform gemäß Figur 3 ist eine Stator-Anordnung 5 in einem Rack 13 außerhalb des geschützten Innenraums 9 aufgebaut. Für beispielsweise Reparatur- und/oder Wartungsarbeiten kann die Stator-Anordnung 5 durch das Rack 13 von einer der Begrenzungswand 8 angenäherten Kontaktposition weggefahren werden, sodass die Stator-Anordnung 5 zugänglich ist.

Zusätzlich kann das Rack 13 einen Antrieb besitzen (nicht gezeigt), um einzelne Kacheln der Stator-Anordnung 5 und/oder die Stator-Anordnung 5 innerhalb einer oder zwischen mehreren Antriebsflächen 7 zu bewegen.

Bei der Ausführungsform gemäß Figur 4 ist eine Stator-Anordnung 5 an eine vertikale Wand angeordnet. Im geschützten Innenraum 9 der Vorrichtung 1 ist ein Mover 4, der mindestens einen Gegenstand 3 auf einer Aufnahme 6 hält. An der vertikalen Wand sind oberhalb des Movers 4 eine Befülleinrichtung 14 und unterhalb des Movers 4 eine weitere Prozessstation 15 fest montiert. Der Mover 4 kann zum Befüllen des mindestens einen Gegenstands 3 zur Befülleinrichtung 14 fahren. Nach erfolgter Füllung kann der Mover 4 mit dem mindestens einen Gegenstand 3 zu der Prozessstation 15 fahren, die vorzugsweise eine Waage sein kann, um den Füllstand des mindestens einen Gegenstand 3 zu messen.

Alternativ kann die Befülleinrichtung 14 und/oder die Prozessstation 15 auf einem Mover 4 positioniert sein (nicht gezeigt). Dadurch kann der Mover 4 relativ zu der Befülleinrichtung 14 und/oder der Prozessstation 15 bewegt werden.

Bei einem weiteren Ausführungsbeispiel könnte(n) die Prozessstation 15 und/oder die Befülleinrichtung 14 auf einem konventionellen Bewegungssystem, insbesondere wie bereits erwähnt, angeordnet sein.

Mit einer erfindungsgemäßen Vorrichtung 1 kann somit ein Verfahren zum Befüllen eines Gegenstandes, vorzugsweise eines Vials, einer Spritze, einer Karpulle und/oder einer Ampulle oder eines Injektionsfläschchens, ausgeführt werden, das wie folgt ablaufen könnte.

Ein Mover 4 bewegt mindestens einen nicht oder teilweise befüllten Gegenstand 3 zu einer Waage, um das Leergewicht des mindestens einen nicht oder teilweise befüllten Gegenstands 3 zu ermitteln. Danach bewegt der Mover 4 den mindestens einen nicht oder teilweise befüllten Gegenstand 3 entlang einer vertikalen Antriebsfläche 7 hin zu einer Befülleinrichtung 14, durch die der mindestens eine nicht oder teilweise befüllte Gegenstand 3 befüllt wird. Nach der Befüllung kann der Mover 4 mit dem mindestens einen befüllten Gegenstand 3 für weitere Verfahrensschritte zu einer weiteren Prozessstation 15, beispielsweise zurück zu der weiteren Waage, bewegt werden.

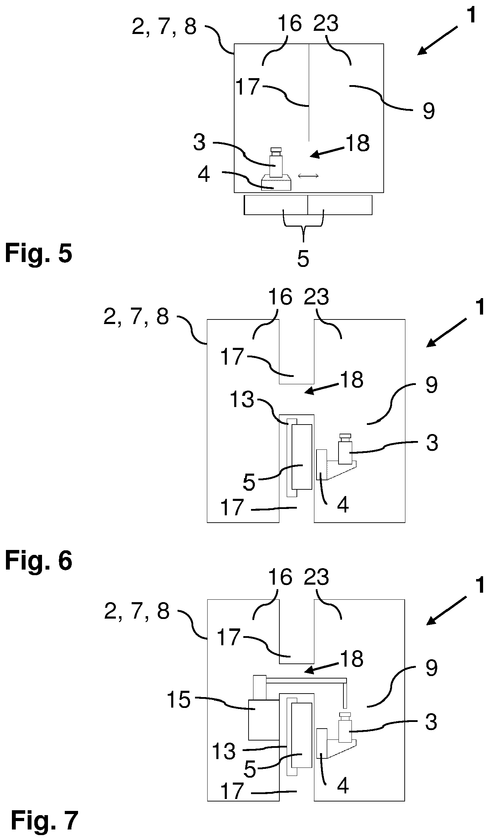

In Figur 5 ist eine Vorrichtung 1 mit zwei Kammern 16, 23 abgebildet. Die zwei Kammern 16, 23 sind durch eine Zwischenwand 17 ausgebildet und über mindestens eine kleine Zugangsöffnung 18 miteinander verbunden. Die hier dargestellte Stator-Anordnung 5 ist am Boden der Vorrichtung 1 ausgebildet. Mindestens ein Mover 4 kann durch eine Horizontalbewegung durch die mindestens eine kleine Zugangsöffnung 18 zwischen den beiden Kammern 16, 23 bewegt werden.

Alternativ oder zusätzlich kann eine Stator-Anordnung 5 auch an einer vertikalen und/oder schrägen Wand angeordnet sein, um den mindestens einen Mover 4 zwischen den mindestens zwei Kammern 16, 23 zu bewegen.

Bei der Ausführungsform gemäß Figur 6 ist mindestens ein Rack 13 mit mindestens einer Stator-Anordnung 5 an einer Zwischenwand 17 zweier Kammern 16, 23 positioniert. Der mindestens eine Mover 4 kann vertikal und/oder horizontal an der Zwischenwand 17 bewegt werden. Durch weitere Stator-Anordnungen 5 (nicht gezeigt) kann der mindestens eine Mover 4 in oder zwischen den mindestens zwei Kammern 16, 23 bewegt werden.

Figur 7 bildet eine Vorrichtung 1 mit zwei Kammern 16, 23 ab, in der eine Prozessstation 15 an einer vertikalen Wand einer ersten Kammer 16 positioniert ist. Die hier abgebildete Prozessstation 15 ragt durch eine Zugangsöffnung 18 in die zweite Kammer 23, kann in alternativen Ausführungsformen jedoch auch in mehrere Kammern 16, 23 ragen. Die Stator-Anordnung 5 ist in eine Zwischenwand 17 eingefasst. Ein in der zweiten Kammer 23 befindlicher Mover 4 kann sich durch die magnetische Kopplung mit der Stator-Anordnung 5 zu der Prozessstationen 15 hinbewegen, wo eine Prozessierung eines Gegenstands 3 ausgeführt werden kann.

Alternativ oder zusätzlich kann die oder ein Teil der Prozessstation 15 verfahrbar sein, beispielsweise verfahrbar innerhalb einer Kammer 16, 23 oder zwischen wenigstens zwei Kammern 16, 23.

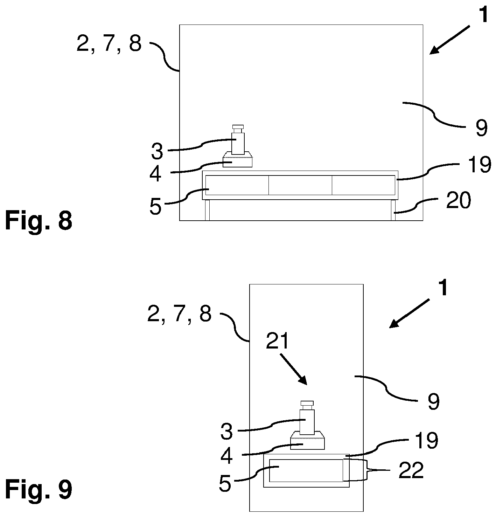

Bei einer Ausführungsform gemäß der Figur 8 befindet sich innerhalb des geschützten Raums 9 der Vorrichtung 1 ein Mover 4 mit einer korrespondierenden Stator-Anordnung 5, wobei die Stator-Anordnung 5 durch eine dichte und magnetisch neutrale Umhüllung 19 allseitig umschlossen ist. Die Umhüllung 19, mitsamt Stator-Anordnung 5, ist robust durch zwei Verankerungen 20 in dem geschützten Innenraum 9 positioniert. Die Anzahl der abstützenden Verankerungen 20 kann alternativ ausgebildet sein, weshalb eine Umhüllung 19 ohne, mit einer oder mit mehr als zwei Verankerungen 20 in dem geschützten Innenraum 9 positioniert sein kann.

Alternativ oder zusätzlich kann die Umhüllung 19, mitsamt Mover 4 und Stator-Anordnung 5, in den geschützten Innenraum eingehängt und/oder eingespannt sein.

Figur 9 zeigt eine Seitenansicht einer Vorrichtung 1, in der ein Gegenstand 3 sich auf einem Mover 4 innerhalb einer durchströmten Zone 21 befindet. Dabei wird, wie für Reinräume bekannt, gefilterte Luft von der Decke in den geschützten Innenraum 9 eingelassen, um die darin vorhandene Luft zu verdrängen. Weiterhin ist in Figur 9 zu sehen, dass der Mover 4 magnetisch an eine Stator-Anordnung 5 gekoppelt ist, die von einem Tunnel 22 dicht umhüllt ist. Die den Tunnel 22 ausformende Umhüllung 19 ist zur störungsfreien Nutzung der Mover-Stator-Anwendung aus magnetisch neutralen Materialien hergestellt. Nicht dargestellt in dieser Figur sind Racks 13 oder weitere Transportvehikel, die ein Ausfahren der Stator-Anordnung 5 aus dem Tunnel 22 ermöglichen.

Die Erfindung schlägt somit allgemein eine Vorrichtung 1 zur Manipulation eines Gegenstandes 3 vor, wobei der Gegenstand 3 von wenigstens einem Mover 4, der magnetisch an einer Stator-Anordnung 5 angekoppelt ist, berührungslos auf einer Antriebsfläche 7 bewegbar ist, wobei die Antriebsfläche 7 als Begrenzungswand 8 eines geschützten Innenraums 9 ausgebildet ist. Die Verwendung einer solchen flexiblen Vorrichtung 1 ist vorzugsweise in der Lebensmittelindustrie oder pharmazeutischen Industrie von Interesse, jedoch nicht auf diese Bereiche beschränkt.

### Bezugszeichenliste

- 1: Vorrichtung
- 2: Gehäuse
- 3: Gegenstand
- 4: Mover
- 5: Stator-Anordnung
- 6: Aufnahme
- 7: Antriebsfläche
- 8: Begrenzungswand
- 9: geschützter Innenraum
- 10: Kopplungsbereich
- 11: Trennschicht
- 12: Trägerkomponenten
- 13: Rack
- 14: Befülleinrichtung
- 15: Prozessstation
- 16: (erste) Kammer
- 17: Zwischenwand
- 18: Zugangsöffnung
- 19: Umhüllung
- 20: Verankerung
- 21: Zone
- 22: Tunnel
- 23: (zweite) Kammer

## Patentansprüche

1. Vorrichtung (1) zur Manipulation eines Gegenstandes (3), wobei der Gegenstand (3) von wenigstens einem Mover (4), der magnetisch an eine Stator-Anordnung (5) angekoppelt ist, berührungslos auf einer Antriebsfläche (7) bewegbar ist, **dadurch gekennzeichnet, dass** die Antriebsfläche (7) als dichte Begrenzung, insbesondere als Begrenzungswand (8), eines geschützten Innenraums (9) ausgebildet ist.

2. Vorrichtung (1) nach Anspruch 1, **dadurch gekennzeichnet, dass** die Stator-Anordnung (5) außerhalb eines geschützten Innenraums (9) angeordnet ist, insbesondere an einer vorzugsweise vertikalen und/oder horizontalen und/oder schrägen Begrenzungswand (8) angeordnet ist, und/oder dass der wenigstens eine Mover (4) im geschützten Innenraum (9) oder außerhalb des geschützten Innenraums (9) angeordnet ist.

3. Vorrichtung (1) nach einem der vorangegangenen Ansprüche, **dadurch gekennzeichnet, dass** die Begrenzungswand (8) des geschützten Innenraums (9) einen Kopplungsbereich (10) aus der Stator-Anordnung (5) und dem wenigstens einen Mover (4) hat, insbesondere wobei die Fläche innerhalb des Kopplungsbereiches (10) kleiner als die Fläche der Begrenzungswand (8) sein kann.

4. Vorrichtung (1) nach einem der vorangegangenen Ansprüche, **dadurch gekennzeichnet, dass** die Begrenzungswand (8) und/oder der oder ein Kopplungsbereich (10) aus einer magnetisch neutralen Trennschicht (11), insbesondere aus einer Edelstahl- und/oder Glasschicht und/oder aus gasdichtem Kunststoff und/oder aus Verbundwerkstoff gefertigt ist, die vorzugsweise weniger als 2 mm stark ist, und/oder dass die Begrenzungswand (8) und/oder der oder ein Kopplungsbereich (10) durch Trägerkomponenten (12), vorzugsweise aus magnetisch neutralen Materialen bestehend, stabilisiert ist.

5. Vorrichtung (1) nach einem der vorangegangenen Ansprüche, **dadurch gekennzeichnet, dass** die Stator-Anordnung (5) in wenigstens einem Rack (13) aufgebaut ist, wobei das wenigstens eine Rack (13) direkt an der Begrenzungswand (8) und/oder dem oder einem Kopplungsbereich (10) angelagert ist, und/oder von und zum Einsatzort bewegbar ist und/oder am Einsatzort zwischen einer der Begrenzungswand (8) angenäherten Arbeitsposition und einer von der Begrenzungswand (8) entfernten Position verstellbar ist.

6. Vorrichtung (1) nach einem der vorangegangenen Ansprüche, **dadurch gekennzeichnet, dass** die oder eine Begrenzungswand (8) und/oder die oder eine Trennschicht (11) von der Vorrichtung (1) abnehmbar sind.

7. Vorrichtung (1) nach einem der vorangegangenen Ansprüche, **dadurch gekennzeichnet, dass** der geschützte Innenraum (9) mindestens zwei Kammern (16, 23) hat, insbesondere wobei die mindestens zwei Kammern (16, 23) durch eine Zwischenwand (17) gebildet sind, die vorzugsweise mindestens eine kleine Zugangsöffnung (18) aufweist und/oder vorzugsweise die Begrenzungswand (8) ausbildet.

8. Vorrichtung (1) nach einem der vorangegangenen Ansprüche, **dadurch gekennzeichnet, dass** sich zumindest eine Prozessstation (15), beispielsweise eine Befülleinrichtung (14), fest oder lösbar positioniert oder auf einem Mover (4) im geschützten Innenraum (9) an der Begrenzungswand (8) und/oder in dem oder einem Kopplungsbereich(10) und/oder in einer Kammer (16) angeordnet und in einer zweiten Kammer (23) befestigt befindet.

9. Vorrichtung (1) nach einem der vorangegangenen Ansprüche, **dadurch gekennzeichnet, dass** die Stator-Anordnung (5) an mindestens einer Begrenzungswand (8) und/oder mindestens einem Kopplungsbereich (10) und/oder zwei benachbarten Wänden des geschützten Innenraums (9) so angeordnet ist, dass der mindestens eine Mover (4) den mindestens einen Gegenstand (3) innerhalb der mindestens zwei Kammern (16, 23) und/oder durch die mindestens eine kleine Zugangsöffnung (18) der Zwischenwand (17) zwischen den mindestens zwei Kammern (16, 23) transportieren kann.

10. Vorrichtung (1) nach einem der vorangegangenen Ansprüche, **dadurch gekennzeichnet, dass** die Stator-Anordnung (5) innerhalb der mindestens einen Zwischenwand (17) zwischen den mindestens zwei Kammern (16, 23) vorzugsweise vertikal angeordnet ist.

11. Vorrichtung (1) nach den Ansprüchen 7 bis 10 **dadurch gekennzeichnet, dass** die Stator-Anordnung (5) in der mindestens einen Zwischenwand (17) in wenigstens einem Rack (13) aufgebaut ist.

12. Vorrichtung (1) nach einem der vorangegangenen Ansprüche, **dadurch gekennzeichnet, dass** der geschützte Innenraum (9) wenigstens eine durchströmte Zone (21) aufweist, insbesondere wobei die Antriebsfläche (7) so ausgerichtet ist, dass der wenigstens eine Mover (4) in die Zone (21) und/oder in der Zone (21) verfahrbar ist.

13. Verfahren zum Befüllen mindestens eines Gegenstands (3) mit einer Vorrichtung nach einem der vorangegangenen Ansprüche, **dadurch gekennzeichnet, dass** der mindestens eine Gegenstand (3) von einem Mover (4) auf einer Antriebsfläche (7) des geschützten Innenraums (9) zu einer Prozessstation (15), beispielsweise einer Befülleinrichtung (14) bewegt und durch die Befülleinrichtung (14) befüllt wird, wobei die Befülleinrichtung (14) im geschützten Innenraum, insbesondere auf der Antriebsfläche (7) positioniert oder auf einem weiteren Mover (4) positioniert ist.

14. Verwendung einer Begrenzungswand (8) eines geschützten Innenraums (9) als Antriebsfläche (7) wenigstens eines Movers (4), der an eine Stator-Anordnung (5) angekoppelt ist.
